# FASCICULE DE BREVET EUROPEEN

(11) **EP 3 004 963 B1**
(45) Date de publication et mention de la délivrance du brevet: **21.11.2018**
(21) Numéro de dépôt: 14726629.0
(22) Date de dépôt: 28.05.2014
(51) Int. Cl.: G02B 27/01

(54) **SYSTÈME DE VISION OCULAIRE AVEC GUIDE OPTIQUE POSITIONNABLE DANS DEUX POSITIONS**
OPTISCHES SYSTEM DES AUGES MIT IN ZWEI STELLUNGEN POSITIONIERBAREM OPTISCHEN WELLENLEITER
OCULAR VISION OPTICAL SYSTEM WITH OPTICAL WAVEGUIDE BEING POSITIONABLE IN TWO POSITIONS

(30) Priorité: 31.05.2013 FR 1354975; 24.07.2013 FR 1357294
(43) Date de publication de la demande: 13.04.2016
(73) Titulaire: Optinvent, 35700 Rennes (FR)
(72) Inventeur: MIRZA, Kayvan, F-35700 Rennes (FR); SALLEN, Piero, F-35700 Rennes (FR); BENOIT, Pascal, F-35700 Rennes (FR)
(74) Mandataire: Cabinet Le Guen Maillet
(86) Numéro de dépôt international: PCT/EP2014/061061
(87) Numéro de publication internationale: WO 2014/191460

(56) Documents cités:
- EP-A1- 2 290 427
- DE-A1-102006 001 505
- DE-U1-202012 003 317
- US-A1- 2006 245 175
- US-A1- 2012 069 448

## Description

La présente invention concerne le domaine des systèmes de vision oculaire basés sur des guides optiques. De tels guides optiques permettent le transport sans déformation d'une image, et permettent ainsi de superposer cette image transportée à une scène extérieure perçue par l'oeil d'un utilisateur du système de vision oculaire. La présente invention concerne aussi le domaine de tels systèmes de vision oculaire équipés en outre d'un dispositif de capture d'images.

Un guide optique comporte généralement une section d'injection, par laquelle le faisceau lumineux transportant une image est introduit. Le faisceau lumineux transportant l'image est issu d'une source pouvant être une matrice de pixels de type LCD (*Liquid Cristal Display* en anglais) ou LCOS (*Liquid Crystal On Silicon* en anglais) éclairés par une source de lumière ou de type OLED (*Organic Light-Emitting Diode* en anglais). Le faisceau lumineux traverse ensuite un système optique permettant d'obtenir un faisceau collimaté, c'est-à-dire dont les rayons sont substantiellement parallèles. On dit aussi que l'image est ainsi portée à l'infini. Le faisceau collimaté est alors introduit dans la section d'injection du guide optique.

Le guide optique permet au faisceau lumineux de se propager par réflexions totales internes, éventuellement grâce à un traitement spécifique des parois du guide optique. Le faisceau lumineux se propage ainsi jusqu'à une section d'extraction permettant la sortie, du guide optique, du faisceau lumineux. La section d'extraction peut être constituée d'un réflecteur terminant le guide optique par un plan incliné.

Le brevet FR 2 925 172 B1 décrit un guide optique doté d'une section d'extraction constituée de microstructures réfléchissantes formées en surface du guide optique. Ces microstructures sont constituées des prismes ayant un angle permettant la sortie, du guide optique, du faisceau lumineux. Les microstructures sont espacées par des espaces interstitiels formés dans le prolongement de la surface du guide optique. Ces espaces interstitiels, c'est-à-dire non couverts de microstructures et prenant place entre celles-ci, sont transparents et permettent ainsi d'obtenir l'effet de vision à travers (*see-through* en anglais). Cela permet de voir l'image transportée par le faisceau lumineux, ainsi que les scènes au-delà du guide optique. Ces espaces interstitiels génèrent cependant un phénomène de variation de luminance sur la transparence du guide optique, ce qui induit des interférences sur la vision des scènes environnantes à travers le guide optique.

Une amélioration, permettant de limiter les interférences perçues tant sur l'image injectée que sur la vision à travers le guide optique, a été proposée par la demande internationale de brevet WO 2012/136470 A1.

De tels guides optiques sont par exemple mis en oeuvre dans des systèmes de vision oculaire. Il existe des applications où il est souhaitable qu'un utilisateur du système de vision oculaire puisse superposer l'image transportée par le guide optique avec la scène extérieure, comme par exemple des applications de réalité augmentée. L'image transportée doit alors être dans l'axe de visée nominale de l'oeil de l'utilisateur. On entend par *axe de visée nominale de l'oeil*, l'axe passant par le centre de l'oeil et par le centre de la pupille de l'oeil lorsque l'utilisateur regarde droit devant lui (c'est-à-dire que l'axe de visée nominale de l'oeil est l'horizontale lorsque l'utilisateur tient la tête droite). Il existe des applications, de type *tableau de bord* (*dashboard* en anglais), où il est souhaitable que l'utilisateur puisse avoir accès à l'image transportée par le guide optique sans obstruer cet axe nominal de visée. Il est souhaitable de pouvoir utiliser un même système de vision oculaire pour ces deux applications, et de pouvoir basculer de l'une à l'autre de ces applications sans avoir à ajuster les réglages optiques du système de vision oculaire.

Notamment dans le cadre des applications de réalité augmentée, le système de vision oculaire peut être équipé d'un dispositif de capture d'images, tel qu'une caméra ou un appareil photo. Une difficulté posée par ce type de système de vision oculaire est qu'une personne en face de laquelle se trouve le porteur du système de vision oculaire ne peut pas être sûre de ne pas être filmée ou prise en photo à son insu. Il est aussi souhaitable de pallier cet inconvénient de l'état de la technique.

Il est connu les documents US 2012/069448 A1, DE 20 2012 003317 U1 et DE 10 2006 001505 A1, qui décrivent des systèmes de vision oculaire destinés à être portés par des utilisateurs, tels que des lunettes informatives, chacun de ces systèmes de vision oculaire comportant au moins un afficheur destiné à être placé dans le champ de vision de l'utilisateur en question et qui peut être ajusté en rotation.

Il est aussi connu le document EP 2 290 427 A1 qui décrit un guide optique pour système de vision oculaire destiné à être porté par un utilisateur.

L'invention concerne un système de vision oculaire destiné à être porté par un utilisateur, le système de vision oculaire est un équipement destiné à être porté fixe par rapport à la tête de l'utilisateur, ledit système de vision oculaire comportant un module afficheur, le module afficheur comportant un guide optique transparent adapté pour propager par réflexions totales internes un faisceau lumineux transportant une image jusqu'à une section d'extraction dudit guide optique. Ledit système de vision oculaire comporte : des moyens de positionnement du guide optique dans une première position dans laquelle la zone d'extraction est placée selon un premier axe correspondant à un axe de visée nominale de l'oeil de l'utilisateur ; des moyens de positionnement du guide optique dans une seconde position dans laquelle la zone d'extraction est placée selon un second axe décalé par rapport à l'axe de visée nominale de l'oeil de l'utilisateur ; et des moyens de rotation du guide optique, autour d'un axe destiné à passer substantiellement par le centre de rotation de l'oeil de l'utilisateur, adaptés pour permettre au guide optique de passer de la première position à la seconde position, et vice-versa. Ainsi, il est possible d'utiliser le système de vision oculaire selon deux modes : un premier mode où la section d'extraction du guide optique est dans l'axe de visée nominale de l'oeil de l'utilisateur, et qui est alors adapté à des applications de réalité augmentée ; un second mode où la section d'extraction du guide optique est décalée de l'axe de visée nominale de l'oeil de l'utilisateur, et qui est alors adapté à des applications de type *tableau de bord.* La rotation autour d'un axe passant substantiellement par le centre de l'oeil permet d'assurer un bon positionnement de la boîte à oeil créée par le guide optique dans l'un comme dans l'autre de ces modes. Il convient de noter que plusieurs positions, décalées de l'axe de visée nominale de l'oeil de l'utilisateur, du guide optique pourraient convenir à des applications de type *tableau de bord.* Ainsi, le système de vision oculaire peut comporter des moyens de positionnement du guide optique dans plus de deux positions par rotation autour d'un axe passant substantiellement par le centre de l'oeil, chacune permettant à l'utilisateur de visualiser l'image transportée par le guide optique. De plus, pour effectuer la rotation du guide optique entre la première position et la seconde position autour d'un axe de rotation destiné à passer substantiellement par le centre de rotation de l'oeil de l'utilisateur, ledit système de vision oculaire comporte : un porte-plot comportant au moins un plot ; un support de fixation au cadre du système de vision oculaire et de guidage comportant au moins une rainure oblongue destinée à recevoir ledit plot, chaque rainure étant telle que, lorsque ledit plot est placé à une extrémité de ladite rainure, le guide optique est dans la première position et, lorsque ledit plot est placé à l'autre extrémité de ladite rainure, le guide optique est dans la seconde position ; et un ressort permettant d'assurer un engagement de chaque plot dans une dite rainure oblongue correspondante. Ainsi, le système de fixation au cadre du système de vision oculaire et de rotation du module afficheur est fiable et à faible encombrement.

Selon un mode de réalisation particulier, le second axe est décalé de 20° par rapport à l'axe de visée nominale de l'oeil de l'utilisateur. Ainsi, l'axe de visée nominale de l'oeil de l'utilisateur peut être dégagé de la présence du guide optique, tout en conservant une boîte à oeil adaptée.

Selon un mode de réalisation particulier, ledit système de vision oculaire étant des lunettes, le module afficheur étant fixé sur une des branches desdites lunettes, ledit système de vision oculaire comporte en outre des moyens d'ajustement en hauteur d'un appui-nez desdites lunettes. Ainsi, il est aisé d'effectuer un ajustement vertical de la boîte à oeil créée par le guide optique, un ajustement effectué pour une parmi ladite première position et ladite seconde position étant valable pour l'autre position.

Selon un mode de réalisation particulier, lesdits moyens d'ajustement en hauteur comportent une molette et des moyens de conversion d'un mouvement de rotation de la molette en un mouvement de translation de l'appui-nez. Ainsi, l'ajustement en hauteur peut être finement réalisé.

Selon un mode de réalisation particulier, lesdits moyens d'ajustement en hauteur comportent une crémaillère composée de crans, chacun des crans définissant une hauteur prédéfinie de l'appui-nez. Ainsi, l'ajustement en hauteur est simple à mettre en oeuvre.

Selon un mode de réalisation particulier, ledit système de vision oculaire étant des lunettes, le module afficheur étant fixé sur une des branches desdites lunettes, ledit système comporte en outre une batterie fixée sur l'autre branche desdites lunettes. Ainsi, le poids du système de vision oculaire est réparti, ce qui augmente le confort d'utilisation.

Selon un mode de réalisation particulier, le système de vision oculaire comporte un ressort permettant d'assurer un engagement de chaque plot dans une dite rainure oblongue correspondante et chaque rainure oblongue comporte à chacune de ses extrémités un trou borgne adapté pour recevoir un dit plot correspondant sous l'action dudit ressort. Ainsi, le maintien en position du guide optique dans la première position ou dans la seconde position est amélioré.

Selon un mode de réalisation particulier, ledit système de vision oculaire comporte en outre un bouton d'actionnement fixé au porte-plot et adapté pour contrer l'action du ressort afin de désengager chaque plot de la rainure oblongue correspondante. Ainsi, il est facile de monter ou démonter le module afficheur.

Selon un mode de réalisation particulier, ledit système de vision oculaire comporte un boîtier dans lequel un évidement est pratiqué, l'évidement étant destiné à recevoir le porte-plot et le support de fixation et de guidage, l'embouchure de l'évidement comportant, à un endroit, une partie plus grande pour permettre d'insérer le porte-plot et le ressort dans ledit boîtier. Ainsi, l'assemblage du mécanisme de rotation est simple.

Selon un mode de réalisation particulier, un dispositif de capture d'images est monté de manière solidaire au module afficheur de telle sorte que l'axe de visée dudit dispositif de capture d'images est parallèle à l'axe de visée de l'utilisateur lorsque l'utilisateur regarde à travers le guide optique. Ainsi, l'axe de visée du dispositif de capture d'images effectue une rotation en même temps et de même magnitude que le guide optique. Alors, lorsque l'utilisateur fait face à une personne, placer le guide optique dans la seconde position entraîne que des images de la personne ne peuvent plus être prises, ce qui permet de minimiser des problèmes de vie privée (« privacy issues » en anglais).

Selon un mode de réalisation particulier, ledit système de vision oculaire comporte au moins un capteur de position permettant de détecter lorsque le guide optique est dans la première position et/ou lorsque le guide optique est dans la seconde position.

Selon un mode de réalisation particulier, ledit système de vision oculaire comporte au moins un voyant lumineux, associé au(x)dit(s) capteur(s) de position, dont un premier état est représentatif du guide optique dans la première position et dont un second état est représentatif du guide optique dans la seconde position. Ainsi, une personne faisant face à l'utilisateur peut facilement savoir si le dispositif de capture d'images permet de prendre des images de ladite personne à son insu.

Selon un mode de réalisation particulier, ledit système de vision oculaire comporte des moyens de communication adaptés pour transmettre à un serveur des images capturées avec ledit dispositif de capture d'images et une information représentative de la position du guide optique détectée par le(s)dit(s) capteur(s) et pour recevoir du serveur l'image à transporter par le guide optique. Ainsi, le serveur peut appliquer des traitements différents sur les images reçues, en fonction de la position dans laquelle se trouve le guide optique (et par voie de conséquence, en fonction de la position dans laquelle se trouve le dispositif de capture d'images).

Selon un mode de réalisation particulier, ledit dispositif de capture d'images étant une caméra, ledit serveur est adapté pour : appliquer sur les images reçues du système de vision oculaire un traitement d'application de réalité augmentée, lorsque le guide optique est dans la première position ; et appliquer sur les images reçues du système de vision oculaire un traitement d'application de reconnaissance gestuelle, lorsque le guide optique est dans la seconde position.

Selon un mode de réalisation particulier, ledit système de vision oculaire comporte des moyens supplémentaires de rotation adaptés pour permettre d'ajuster horizontalement, lorsque le guide optique est dans la première position, la zone d'extraction par rapport à l'axe de visée nominale de l'oeil de l'utilisateur. Ainsi, ledit système peut facilement s'adapter à des tolérances de flexion d'un cadre de lunettes sur lequel est monté ledit système et/ou des tolérances de dimension dudit cadre et/ou une plus grande variété d'écarts inter-pupillaires.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un guide optique, tel qu'utilisé dans au moins un mode de réalisation de la présente invention ;
- la Fig. 2A illustre schématiquement un système de vision oculaire, dans lequel le guide optique est placé dans une première position ;
- la Fig. 2B illustre schématiquement le système de vision oculaire, dans lequel le guide optique est placé dans une seconde position ;
- la Fig. 3A illustre schématiquement un mécanisme d'ajustement en hauteur d'un appui-nez de lunettes, dans un mode de réalisation particulier du système de vision oculaire ;
- la Fig. 3B illustre schématiquement un autre mécanisme d'ajustement en hauteur de l'appui-nez de lunettes, dans un mode de réalisation particulier du système de vision oculaire ;
- la Fig. 4A illustre schématiquement une première vue éclatée d'un mécanisme de rotation du système de vision oculaire, permettant au guide optique de passer de la première position à la seconde position, et vice versa, dans un mode de réalisation particulier du système de vision oculaire ;
- la Fig. 4B illustre schématiquement une seconde vue éclatée du mécanisme de rotation du système de vision oculaire, permettant au guide optique de passer de la première position à la seconde position, et vice versa, dans un mode de réalisation particulier du système de vision oculaire ;
- la Fig. 5A illustre schématiquement une première vue d'un boîtier de branche de lunettes, permettant la mise en oeuvre du mécanisme de rotation du système de vision oculaire, dans un mode de réalisation particulier du système de vision oculaire ;
- la Fig. 5B illustre schématiquement une seconde vue d'un boîtier de branche de lunettes, permettant la mise en oeuvre du mécanisme de rotation du système de vision oculaire, dans un mode de réalisation particulier du système de vision oculaire ;
- la Fig. 6 illustre schématiquement un support de fixation et de guidage faisant partie du mécanisme de rotation du système de vision oculaire, dans un mode de réalisation particulier du système de vision oculaire ;
- la Fig. 7A illustre schématiquement un premier agencement de boîte à oeil dans la première position ;
- la Fig. 7B illustre schématiquement un second agencement de boîte à oeil dans la seconde position ;
- la Fig. 7C illustre schématiquement un troisième agencement de boîte à oeil qui ne correspond pas à un mode de réalisation de la présente invention ;
- la Fig. 8 illustre schématiquement un autre système de vision oculaire, qui est équipé d'un dispositif de capture d'images ;
- la Fig. 9A illustre schématiquement ledit autre système de vision oculaire, dans lequel le guide optique est placé dans la première position et le dispositif de capture d'images est placé dans une position correspondante ;
- la Fig. 9B illustre schématiquement ledit autre système de vision oculaire, dans lequel le guide optique est placé dans la seconde position et le dispositif de capture d'images est placé dans une autre position correspondante ;
- la Fig. 10A illustre schématiquement un quatrième agencement de boîte à oeil ; et
- la Fig. 10B illustre schématiquement un cinquième agencement de boîte à oeil.

La présente invention consiste en un système de vision oculaire comportant un guide optique permettant le transport sans déformation d'une image, et permettant ainsi de superposer cette image transportée à une scène extérieure perçue par l'oeil d'un utilisateur du système de vision oculaire.

L'invention va être décrite en référence à un mode particulier de réalisation où le système de vision oculaire est une paire de lunettes informatives. L'invention peut toutefois être mise en oeuvre dans d'autres contextes, comme par exemple un casque de pilote, ou tout autre équipement destiné à être porté fixe par rapport à la tête de l'utilisateur. Par exemple, le système oculaire peut être un casque audio sur lequel est monté, de manière rotative, le guide optique.

Les positionnements relatifs d'éléments par rapport à d'autres éléments (e.g. haut, bas, horizontal, vertical,...) sont donnés en considérant une situation où les lunettes sont portées par l'utilisateur, sauf mention contraire.

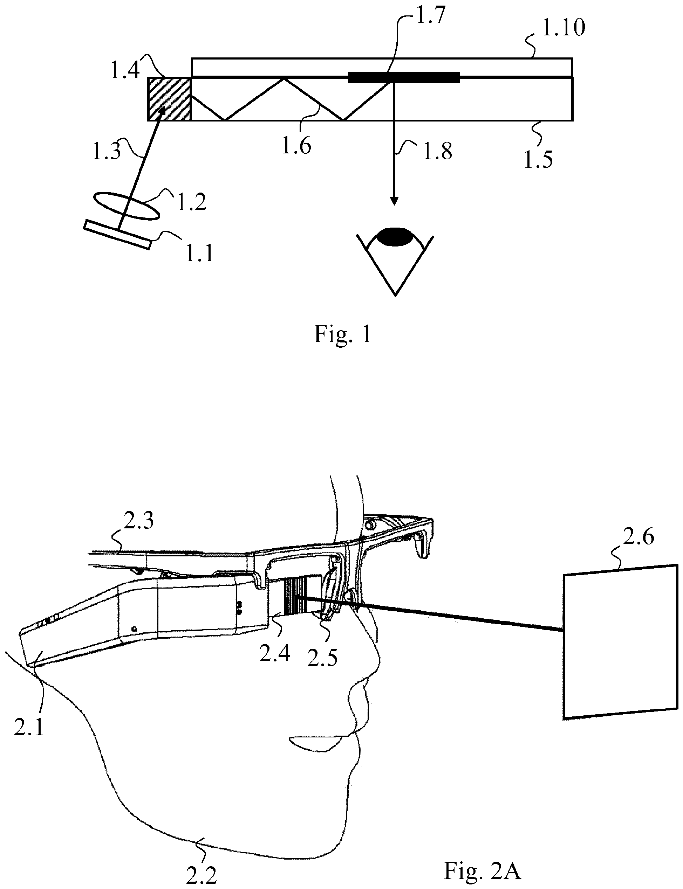

La Fig. 1 illustre schématiquement un guide optique, tel qu'il peut être utilisé dans le système de vision oculaire.

Le guide optique repose sur celui décrit dans la demande internationale de brevet WO 2012/136470 A1, et comporte deux parties principales: une première partie 1.5 et une seconde partie 1.10.

La première partie 1.5 permet de propager, par réflexions successives, un faisceau lumineux 1.6 transportant une image (une vidéo étant une succession d'images selon un rythme prédéfini) sur une distance prédéfinie. La première partie 1.5 comporte une section d'extraction permettant de faire sortir le faisceau lumineux du guide optique une fois que le faisceau a atteint cette distance préfinie.

La seconde partie 1.10 est constituée dans un matériau substantiellement identique à celui de ladite première partie 1.5. La seconde partie 1.10 se superpose à la première partie 1.5, et permet d'obtenir l'effet de vision à travers (*see-through* en anglais), sans phénomène de variation de luminance sur la transparence du guide optique.

Une source de lumière 1.1 génère le faisceau lumineux transportant l'image destinée à transiter par le guide optique. Cette source peut consister en une matrice de pixels LCD ou LCOS disposant d'un éclairage arrière ou encore d'une matrice de pixels OLED.

Le faisceau lumineux est ensuite collimaté par un système optique 1.2. Les différents pixels de l'image sont donc projetés par un faisceau de rayons lumineux parallèles 1.3 en sortie du système optique 1.2, et le champ de vision est défini par la focale de l'objectif et par la demi-diagonale de l'image à transporter. Le faisceau lumineux collimaté 1.3 est ensuite projeté dans une section d'injection 1.4, afin de permettre la propagation du faisceau lumineux par réflexions totales internes dans le guide optique.

Le faisceau lumineux est alors transporté dans la première partie 1.5 jusqu'à ce qu'il parvienne à la section d'extraction, à partir de laquelle le faisceau lumineux est projeté hors du guide optique. La première partie 1.5 est constituée dans un matériau transparent à la lumière. Si l'indice du matériau est supérieur aux indices des milieux qui l'entourent, des réflexions internes totales se produisent naturellement dès lors que l'angle d'incidence des rayons du faisceau, par rapport à la surface sur laquelle frappe le faisceau lumineux, est suffisamment faible.

La section d'extraction est située sur l'une des faces de la première partie 1.5. La section d'extraction permet de renvoyer le faisceau lumineux vers l'autre face de la première partie 1.5 selon un angle sensiblement perpendiculaire, ce qui permet la sortie du faisceau lumineux 1.8 du guide optique. Le faisceau lumineux 1.8 est ainsi projeté hors du dispositif de guidage vers l'oeil de l'utilisateur du système de vision oculaire.

La section d'extraction est située dans une zone 1.7 du guide optique, dans laquelle la première partie 1.5 comprend au moins une microstructure, située en surface et comportant une surface plane adaptée pour permettre la sortie, du guide optique, de rayons du faisceau lumineux venant frapper ladite surface plane. Dans cette zone 1.7, la seconde partie 1.10 comprend au moins une microstructure de forme complémentaire à celle(s) de la première partie 1.5. Les microstructures qui sont complémentaires l'une de l'autre sont ainsi placées en vis-à-vis.

Les première 1.5 et seconde 1.10 parties sont assemblées de telle sorte que toute microstructure de la section d'extraction est séparée de sa microstructure complémentaire par un milieu transparent d'épaisseur substantiellement constante. L'épaisseur est choisie de manière à entraîner une modification limitée de la vision de la scène extérieure. Les microstructures et leurs complémentaires étant substantiellement parallèles du fait de l'épaisseur substantiellement constante du milieu transparent, la vision de la scène extérieure n'est pas substantiellement modifiée, les rayons ne subissant qu'une petite translation. On peut se référer à la demande de brevet WO 2012/136470 A1 pour plus de détails sur la mise en oeuvre de ces microstructures et de la section d'injection 1.4.

En mettant en oeuvre une pluralité de telles microstructures, cela permet d'obtenir une boîte à oeil dont la longueur, dans le sens de propagation du faisceau lumineux dans le guide optique, est grande au vu de l'épaisseur du guide optique, comparativement à la mise en oeuvre d'un simple plan incliné (pour une même épaisseur du guide optique). On appelle « *boîte à oeil* » l'espace dans lequel se forme l'image collimatée, transportée par le guide optique, destinée à être vue par l'utilisateur. Avec une telle approche, il est possible d'obtenir une boîte à oeil dont la longueur est de l'ordre de 9 mm et dont la hauteur est de l'ordre de 5 mm. Un diamètre typique de pupille d'oeil humain étant de l'ordre de 3 à 4 mm, une telle boîte à oeil permet à différents utilisateurs avec différents écarts interpupillaires d'utiliser le système de vision oculaire sans avoir à effectuer de réglage horizontal du positionnement de la boîte à oeil.

Il est possible de munir le système de vision oculaire d'un autre type de guide optique, comme par exemple celui décrit dans le brevet FR 2 925 172 B1.

La Fig. 2A illustre schématiquement un système de vision oculaire, dans lequel le guide optique est placé dans une première position.

Sur la Fig. 2A, le système de vision oculaire est construit sur une base de lunettes 2.3 destinées à être portées par un utilisateur, dont la tête 2.2 est aussi schématiquement représentée sur la Fig. 2A. Les lunettes 2.3 peuvent être équipées de verres transparents, teintés ou photochromiques. Le système de vision oculaire comporte un module afficheur 2.1. Le module afficheur 2.1 comporte un guide optique 2.4, tel que précédemment décrit en relation avec la Fig. 1. Le module afficheur 2.1, et par voie de conséquence le guide optique 2.4, est ainsi monté de manière rotative sur les lunettes 2.3. Le module afficheur 2.1 est par exemple monté, comme illustré sur la Fig. 2A, sur la branche droite des lunettes 2.3. Un agencement symétrique permettrait d'installer le module afficheur 2.1 sur la branche gauche.

Dans un mode de réalisation particulier, le module afficheur 2.1 est alimenté grâce à une batterie montée sur l'autre branche des lunettes 2.3, ce qui permet de répartir le poids du système de vision oculaire, et ainsi assurer une meilleure stabilité des lunettes 2.3 à l'utilisation et donc un meilleur confort pour l'utilisateur.

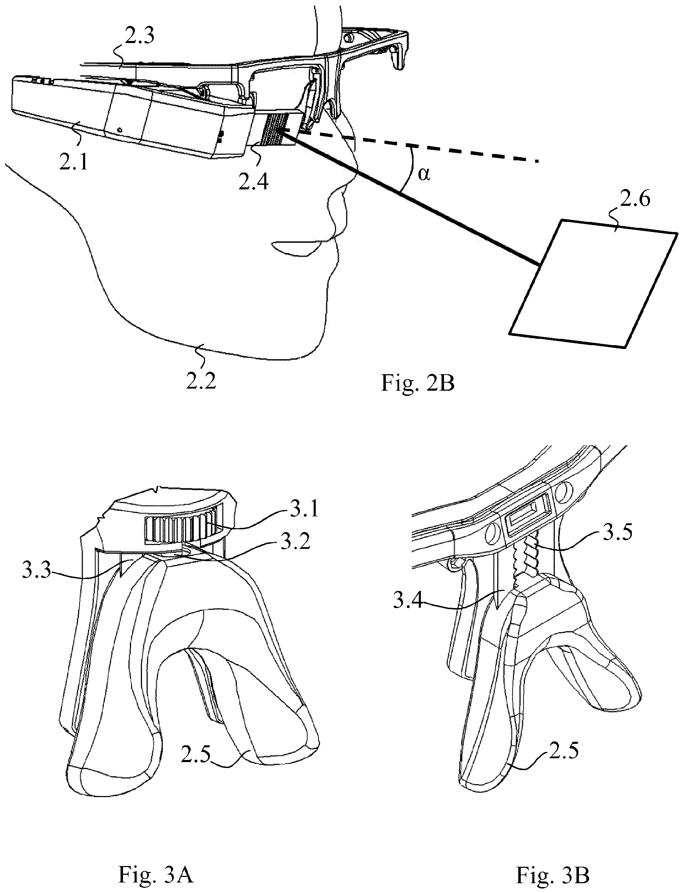

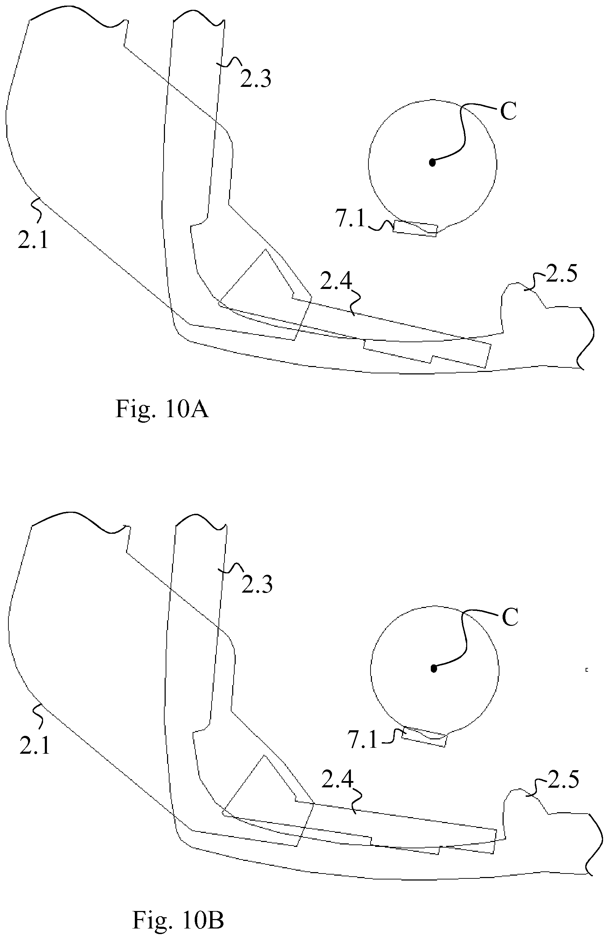

La première position du guide optique 2.4 est telle que la zone d'extraction du guide optique 2.4 est substantiellement centrée sur l'axe de visée nominale de l'oeil de l'utilisateur. Un mécanisme optionnel d'ajustement en hauteur d'un appui-nez 2.5 des lunettes 2.3, permettant de régler le positionnement vertical de la boîte à oeil par rapport à l'axe de visée nominale de l'oeil de l'utilisateur, est décrit ci-après en relation avec la Fig. 3A. Un mécanisme optionnel alternatif d'ajustement en hauteur de l'appui-nez 2.5, permettant de régler le positionnement vertical de la boîte à oeil par rapport à l'axe de visée nominale de l'oeil de l'utilisateur, est décrit ci-après en relation avec la Fig. 3B. Un mécanisme optionnel d'ajustement horizontal du guide optique 2.4, permettant de régler le positionnement horizontal de la boîte à oeil par rapport à l'axe de visée nominale de l'oeil de l'utilisateur, est décrit ci-après en relation avec les Figs. 10A et 10B.

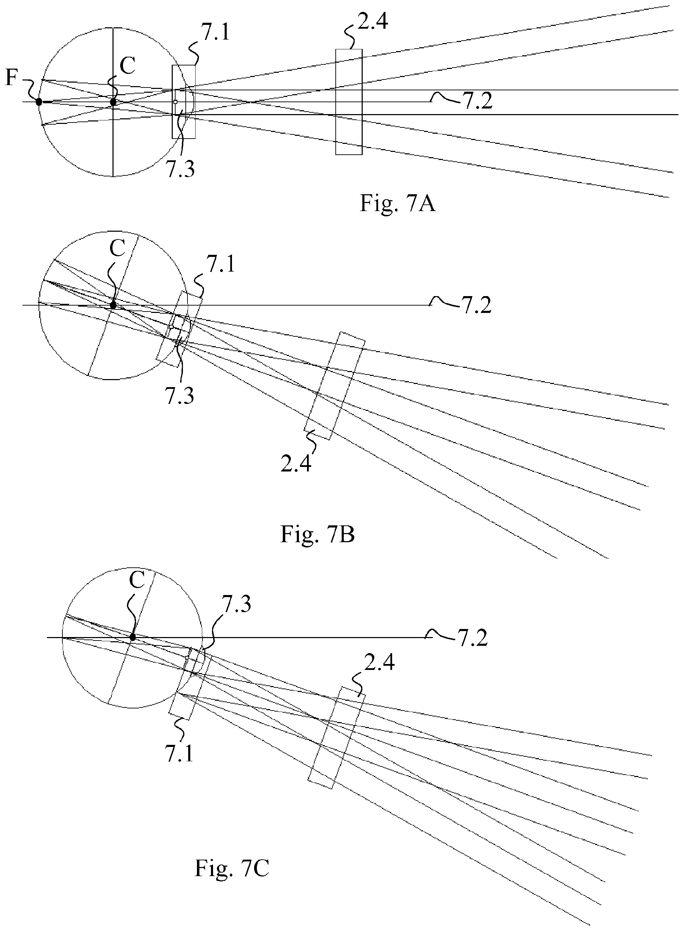

La première position représentée sur la Fig. 2A permet de créer une boîte à oeil destinée à englober totalement la pupille de l'utilisateur. Une représentation de cette boîte à oeil est fournie à la Fig. 7A, décrite ci-après. La première position représentée sur la Fig. 2A permet ainsi à l'utilisateur de voir, de manière superposée, la scène extérieure en vue à travers et une image 2.6 transportée par le guide optique 2.4. Cette première position est particulièrement adaptée à une application de réalité augmentée, par superposition d'images virtuelles (transportées par le guide optique 2.4) aux images réelles (vues à travers le guide optique 2.4).

La Fig. 2B illustre schématiquement le système de vision oculaire de la Fig. 2A, mais dans lequel le guide optique 2.4 est placé dans une seconde position.

Sur la Fig. 2B, le module afficheur 2.1 est monté, comme sur la Fig. 2A, de manière rotative sur la branche droite des lunettes 2.3.

La seconde position du guide optique 2.4 est telle que la zone d'extraction du guide optique 2.4 est décalée d'un angle prédéfini α par rapport à l'axe de visée nominale de l'oeil de l'utilisateur, en prenant comme axe de rotation un axe passant substantiellement par le centre de rotation de l'oeil, *i.e.* le centre de l'oeil. Dans l'agencement de la Fig. 2B, la rotation s'opère de telle sorte que le guide optique 2.4 dans la première position est aligné verticalement avec le guide optique 2.4 dans la seconde position. En d'autres termes, l'axe de rotation susmentionné est horizontal et perpendiculaire à l'axe de visée nominale de l'oeil. Dans d'autres agencements, la rotation s'opère de telle sorte que le guide optique 2.4 dans la première position est aligné horizontalement avec le guide optique 2.4 dans la seconde position. En d'autres termes, l'axe de rotation susmentionné est alors vertical.

L'angle α est préférentiellement de 20°, de manière à dégager l'axe de visée nominale de l'oeil de la présence du guide optique 2.4. La seconde position est aussi préférentiellement plus basse que la première position. En effet, regarder vers le sol est plus confortable pour l'oeil que de regarder vers le haut, et la luminosité y est typiquement plus adaptée pour regarder l'image transportée par le guide optique 2.4. De plus, un déplacement vertical du guide optique 2.4 permet un encombrement moindre qu'un déplacement horizontal du guide optique 2.4.

La seconde position représentée sur la Fig. 2B permet de créer une boîte à oeil destinée à englober totalement la pupille de l'utilisateur lorsque l'utilisateur décale son axe de visée de l'angle α vers le bas sans bouger la tête. Une représentation de cette boîte à oeil est fournie à la Fig. 7B, décrite ci-après. La seconde position représentée sur la Fig. 2B permet ainsi à l'utilisateur de voir, en baissant les yeux, l'image 2.6 transportée par le guide optique 2.4. Cette seconde position est particulièrement adaptée à une application de type *tableau de bord.*

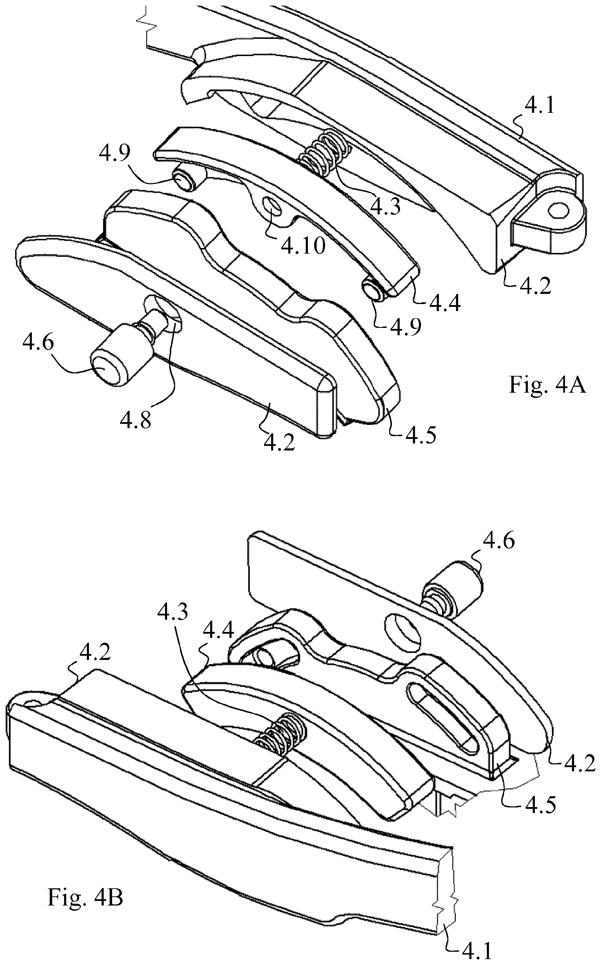

Le passage de la première position à la seconde position du guide optique 2.4 s'effectue par rotation du module afficheur 2.1 par rapport au cadre des lunettes. Cette rotation s'effectue par rapport à un axe de rotation passant substantiellement par le centre de rotation de l'oeil de l'utilisateur. Un mécanisme préférentiel permettant de fixer le module afficheur 2.1 aux lunettes 2.3, et permettant en outre d'effectuer cette rotation, est décrit ci-après en relation avec les Figs. 4A, 4B, 5A, 5B et 6.

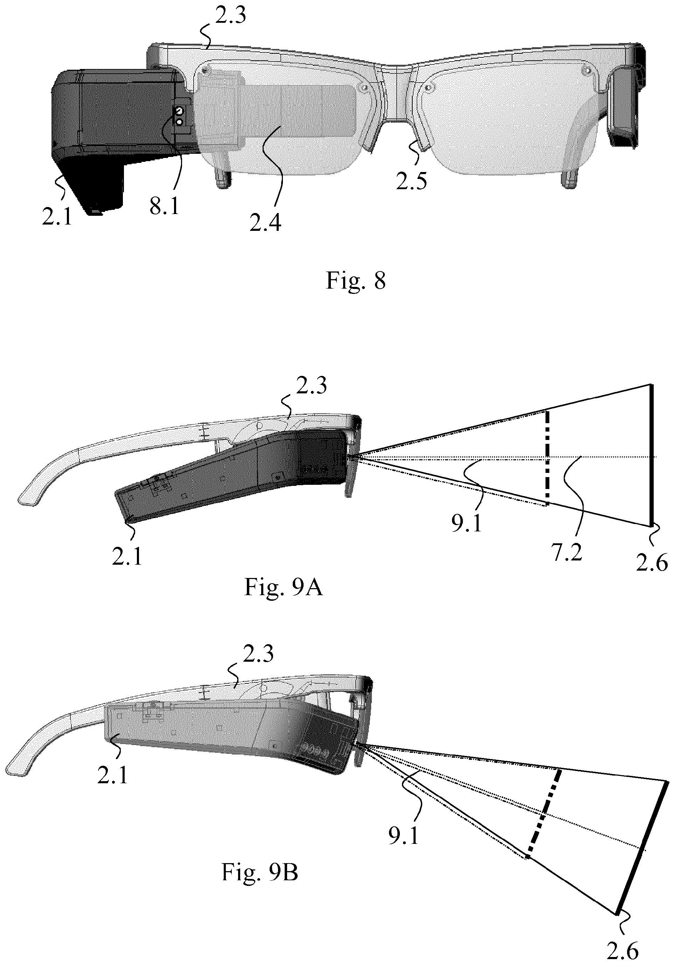

Les Figs. 2A et 2B focalisent sur le positionnement du guide optique 2.4 par rapport au cadre des lunettes. Le système de vision oculaire peut en outre comporter un dispositif de capture d'images, tel qu'une caméra ou un appareil photo. Cet aspect est détaillé ci-après en relation avec les Figs. 8, 9A et 9B.

La Fig. 3A illustre schématiquement un mécanisme d'ajustement en hauteur d'un appui-nez 2.5 des lunettes 2.3. En ajustant la hauteur de l'appui-nez 2.5 par rapport au cadre des lunettes 2.3, l'utilisateur peut assurer que sa pupille s'inscrit dans la boîte à oeil créée dans la première position du guide optique, et par voie de conséquence dans la seconde position du guide optique 2.4. L'utilisateur place alors le module afficheur 2.1 de sorte que le guide optique 2.4 soit placé dans la première position. L'utilisateur ajuste alors la hauteur de l'appui-nez 2.5 par rapport au cadre des lunettes 2.3 jusqu'à ce que l'image transportée par le guide optique 2.4 soit complètement visible par l'oeil de l'utilisateur. En d'autres termes, l'utilisateur effectue un ajustement vertical de la boîte à oeil. Une fois effectué le réglage en hauteur de l'appui-nez 2.5 pour la première position du guide optique 2.4, ce réglage reste applicable pour la seconde position du guide optique 2.4. Cette facilité de réglage vient du fait que la rotation pour passer de la première position du guide optique 2.4 à la seconde position du guide optique 2.4, et vice-versa, s'effectue autour d'un axe de rotation passant substantiellement par le centre de rotation de l'oeil de l'utilisateur. Un nouveau réglage de la boîte à oeil serait nécessaire dans la seconde position du guide optique 2.4 si l'axe de rotation avait été différent, notamment si l'axe de rotation passait substantiellement par le centre focal de l'oeil.

L'appui-nez 2.5 est assemblé avec le cadre des lunettes 2.3 grâce à des moyens d'ajustement en translation 3.2 pour permettre l'ajustement en hauteur de l'appui-nez 2.5. Les moyens d'ajustement en translation 3.2 comportent préférentiellement une molette 3.1 permettant un réglage fin de la hauteur de l'appui-nez 2.5. La conversion du mouvement de rotation de la molette 3.1 en un mouvement de translation de l'appui-nez 2.5 est par exemple réalisée au moyen d'un ensemble formé d'une tige filetée, entraînée en rotation par la molette 3.1, et d'un trou taraudé pratiqué dans l'appui-nez 2.5. La finesse du réglage en hauteur de l'appui-nez 2.5 dépend alors du pas (*lead* en anglais) de la tige filetée et du trou taraudé. Ces moyens d'ajustement en translation 3.2 peuvent être complétés par des moyens de guidage en translation et de blocage en rotation 3.2 assurant ainsi une translation efficace de l'appui-nez 2.5 par rotation de la molette 3.1. De tels moyens de guidage 3.2 prennent par exemple la forme de lamelles s'insérant dans des fentes de l'appui-nez 2.5.

D'autres formes de moyens d'ajustement en translation peuvent être mises en oeuvre pour ajuster la hauteur de l'appui-nez 2.5. Un autre exemple de réalisation est montré sur la Fig. 3B.

La Fig. 3B illustre schématiquement un mécanisme d'ajustement en hauteur de l'appui-nez 2.5. En ajustant la hauteur de l'appui-nez 2.5 par rapport au cadre des lunettes 2.3, l'utilisateur peut assurer que sa pupille s'inscrit dans la boîte à oeil créée dans la première position du guide optique, et par voie de conséquence dans la seconde position du guide optique 2.4.

L'appui-nez 2.5 est assemblé avec le cadre des lunettes 2.3 grâce à des moyens d'ajustement en translation 3.4 pour permettre l'ajustement en hauteur de l'appui-nez 2.5. Les moyens d'ajustement en translation 3.4 incluent préférentiellement une crémaillère 3.5 comportant des crans, chacun de ces crans permettant de placer l'appui-nez 2.5 à une hauteur prédéfinie relativement au cadre des lunettes 2.3. La finesse du réglage en hauteur de l'appui-nez 2.5 dépend alors de la taille des crans de la crémaillère 3.5.

Préférentiellement, la partie de l'appui-nez 2.5 qui est destinée à être en appui sur le nez de l'utilisateur est en matière souple, éventuellement flexible, pour permettre de bien épouser la forme du nez.

Les Figs. 4A et 4B illustrent schématiquement une première vue éclatée, et respectivement une seconde vue éclatée, d'un mécanisme de rotation du système de vision oculaire, permettant au guide optique 2.4 de passer de la première position à la seconde position, et vice versa.

Les Figs. 4A et 4B comportent schématiquement et partiellement une branche 4.1 des lunettes 2.3, sur laquelle le module afficheur est destiné à être fixé, et ce, de manière facilement démontable sans avoir recours à des outils.

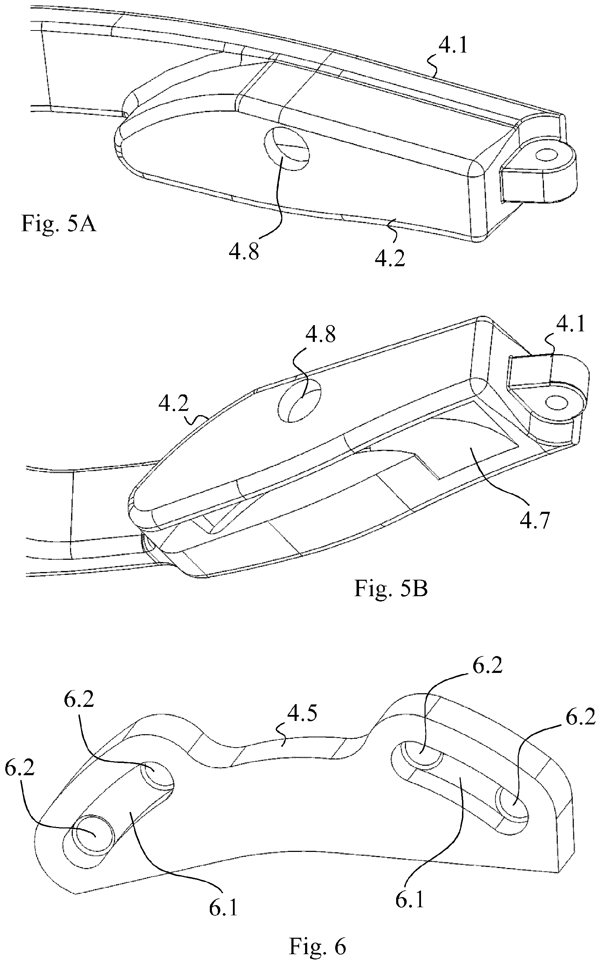

La branche 4.1 est munie d'un boîtier 4.2 comportant un évidement 4.7 dans lequel un porte-plot 4.4 et un support de fixation et de guidage 4.5 sont destinés à se loger. Une vue en perspective du support de fixation et de guidage 4.5 est représentée sur la Fig. 6. Une vue en perspective du boîtier 4.2 est représentée sur la Fig. 5A. L'évidement 4.7 est débouchant sur une paroi antérieure du boîtier 4.2, tel que montré sur la Fig. 5B. Sur les Figs. 4A et 4B, une paroi du boîtier 4.2 a été désolidarisée du reste du boîtier 4.2 pour faciliter l'identification des pièces du mécanisme de rotation.

Le porte-plot 4.4 est rendu solidaire de la branche 4.1 grâce à un ressort 4.3. Le ressort 4.3 prend par exemple appui dans un premier trou borgne pratiqué dans le premier bloc 4.2 et prend appui sur le porte-plot 4.4 grâce à un second trou borgne pratiqué dans le porte-plot 4.4 ou grâce à un épaulement dans un trou traversant pratiqué dans le porte-plot 4.4. Le ressort 4.3 est tel que, au repos, le ressort 4.3 tend à appuyer le porte-plot 4.4 sur le support de fixation et de guidage 4.5.

Le support de fixation et de guidage 4.5 est fixé au module afficheur 2.1, ou fait partie du module afficheur 2.1. Le support de fixation et de guidage 4.5 interagit avec le porte-plot 4.4 pour permettre la rotation du module afficheur 2.1 par rapport au cadre des lunettes 2.3, et ainsi permettre au guide optique 2.4 de passer de la première position à la seconde position, et vice-versa. Pour ce faire, le porte-plot 4.4 comporte au moins un plot 4.9. Sur les Figs. 4A et 4B, le porte-plot 4.4 comporte, de manière illustrative, deux plots 4.9. Chaque plot 4.9 est destiné à se loger dans une rainure oblongue respective 6.1 pratiquée dans le support de fixation et de guidage 4.5. Chaque rainure oblongue 6.1 est telle que, lorsque le plot 4.9 qui lui correspond est positionné à une extrémité de ladite rainure oblongue 6.1, le guide optique est placé dans la première position, et, lorsque ledit plot 4.9 est positionné à l'autre extrémité de ladite rainure oblongue 6.1, le guide optique est placé dans la seconde position. Chaque rainure oblongue 6.1 a une forme d'arc de cercle de sorte que, lorsque chaque plot 4.9 suit la rainure oblongue 6.1 correspondante d'une extrémité à l'autre, le guide optique 2.4 passe de la première position à la seconde position (ou l'inverse), par rotation autour d'un axe passant substantiellement par le centre de l'oeil.

Préférentiellement, un trou borgne 6.2 est pratiqué au fond de chaque rainure oblongue 6.1, à chacune de ses extrémités. Ce trou borgne 6.2 permet de recevoir le plot 4.9 correspondant. Ainsi, lorsque le plot 4.9 suit la rainure oblongue 6.1 qui lui correspond et parvient à une extrémité de ladite rainure oblongue 6.1, ledit plot 4.9 pénètre dans le trou borgne 6.2 sous l'action du ressort 4.3. En forçant légèrement sur le module afficheur 2.1 lors d'un mouvement de rotation pour passer de la première position à la seconde position du guide optique 2.4, l'action du ressort 4.3 est contrée et ledit plot 4.9 se désengage du trou borgne. Un chanfrein sur l'extrémité de chaque plot 4.9 permet de désengager plus facilement ledit plot dudit trou borgne 6.2. Ainsi, grâce à ces trous borgnes 6.2, le maintien en place du module afficheur 2.1 pour que le guide optique 2.4 soit dans la première ou seconde position est facilité et amélioré.

Le fait que l'évidement 4.7 soit débouchant permet d'insérer le support de fixation et de guidage 4.5 dans le boîtier 4.2 et d'en retirer le support de fixation et de guidage 4.5. Cela permet de facilement monter le module afficheur 2.1 sur la branche 4.1 des lunettes 2.3 et d'en facilement le démonter. L'embouchure de l'évidement 4.7 est, à un endroit, plus grande pour permettre d'insérer le porte-plot 4.4 et le ressort 4.3 à l'intérieur du boîtier 4.2. Le ressort 4.3 est alors monté sur le porte-plot 4.4. Comprimer le ressort permet de faire pénétrer l'ensemble formé par le porte-plot 4.4 et le ressort 4.3 par cette partie élargie de l'évidement 4.7. Ensuite, il suffit de faire glisser cet ensemble dans l'évidement 4.7 jusqu'à ce que le ressort 4.3 vienne prendre position dans le premier trou borgne du boîtier 4.2.

Un trou traversant 4.8 est préférentiellement pratiqué dans une paroi du boîtier 4.2 pour permettre de fixer un bouton d'actionnement 4.6 au porte-plot 4.4. Le bouton d'actionnement 4.6 est fixé au porte-plot 4.4 grâce à un trou 4.10 pratiqué dans le porte-plot 4.4. Le bouton d'actionnement 4.6 comporte alors une tige emmanchée à force dans le trou 4.10. D'autres moyens de fixation du bouton d'actionnement 4.6 au porte-plot 4.4 peuvent être mis en oeuvre, par exemple grâce à un filetage, le bouton d'actionnement 4.6 étant alors vissé au porte-plot 4.4. Le bouton d'actionnement 4.6 permet alors de déplacer le porte-plot 4.4 contre l'action du ressort 4.3. En comprimant le ressort 4.3, alors que le module afficheur 2.1 est fixé à la branche 4.1, chaque plot 4.9 se désengage de la rainure oblongue 6.1 correspondante. Le porte-plot 4.4 et le support de fixation et de guidage 4.5 ne sont alors plus imbriqués l'un dans l'autre, et le support de fixation et de guidage 4.5 peut alors être sorti de l'évidement 4.7, afin de détacher le module afficheur 2.1 de la branche 4.1. En comprimant le ressort 4.3, alors que le module afficheur 2.1 est détaché de la branche 4.1, de la place est libérée dans l'évidement 4.7 pour permettre d'y insérer le support de fixation et de guidage 4.5. Une fois le support de fixation et de guidage 4.5 inséré dans l'évidement 4.7, en relâchant le ressort 4.3, chaque plot 4.9 s'engage de la rainure oblongue 6.1 correspondante, afin d'attacher le module afficheur 2.1 à la branche 4.1.

La Fig. 7A illustre schématiquement un premier agencement de boîte à oeil dans la première position du guide optique 2.4. Le premier agencement de boîte à oeil correspond à un positionnement de la zone d'extraction du guide optique 2.4 dans l'axe de visée nominale 7.2 de l'oeil de l'utilisateur. On remarque alors que la boîte à oeil créée 7.1 englobe la pupille 7.3 de l'oeil. L'image transportée par le guide optique 2.4 est alors complètement visible par l'oeil de l'utilisateur.

La Fig. 7B illustre schématiquement un second agencement de boîte à oeil dans la seconde position du guide optique 2.4. Le second agencement de boîte à oeil correspond à un décalage angulaire de 20° de la zone d'extraction du guide optique 2.4 par rapport à l'axe de visée nominale 7.2 de l'oeil de l'utilisateur, en prenant comme axe de rotation un axe horizontal passant par le centre C de rotation de l'oeil, *i.e.* le centre C de l'oeil. On remarque alors que la boîte à oeil créée 7.1 englobe la pupille 7.3 de l'oeil. L'image transportée par le guide optique 2.4 est, là aussi, complètement visible par l'oeil de l'utilisateur. Cette figure démontre ainsi que, en effectuant une rotation autour d'un axe passant substantiellement par le centre C de rotation de l'oeil, il est possible d'obtenir, dans la seconde position du guide optique 2.4, un bon rendu de l'image transportée par le guide optique 2.4. De plus, ledit décalage angulaire de 20° permet de dégager l'axe de visée nominale 7.2 de l'oeil de la présence du guide optique 2.4.

La Fig. 7C illustre schématiquement un troisième agencement de boîte à oeil dans une troisième position (fictive) du guide optique 2.4. qui ne correspond pas à un mode de réalisation de la présente invention. Le troisième agencement de boîte à oeil correspond aussi à un décalage angulaire de 20° de la zone d'extraction du guide optique 2.4 par rapport à l'axe de visée nominale 7.2 de l'oeil de l'utilisateur, mais en prenant comme axe de rotation un axe horizontal passant par le centre focal F de l'oeil (dans sa position lorsque l'utilisateur regarde droit devant). On remarque alors que la boîte à oeil créée 7.1 n'englobe que partiellement la pupille 7.3 de l'oeil. L'image transportée par le guide optique 2.4 n'est donc pas complètement visible par l'oeil de l'utilisateur. Cette figure démontre ainsi que, en effectuant une rotation autour d'un axe autre qu'un axe passant substantiellement par le centre C de rotation de l'oeil, il n'est pas possible d'obtenir, dans cette position du guide optique 2.4, un bon rendu de l'image transportée par le guide optique 2.4, à moins que le décalage angulaire entre la première position et la troisième position ne soit faible (inférieur à 20°), auquel cas l'axe de visée nominale 7.2 de l'oeil est partiellement masqué par le guide optique 2.4.

La Fig. 8 illustre schématiquement un autre système de vision oculaire, qui est équipé d'un dispositif 8.1 de capture d'images. Cet autre système de vision oculaire reprend les agencements précédemment décrits. Le dispositif 8.1 de capture d'images est solidaire du module afficheur 2.1 et est préférentiellement intégré au module afficheur 2.1, comme montré sur la Fig. 8. L'axe de visée du dispositif 8.1 de capture d'images est parallèle à l'axe de visée de l'utilisateur lorsque l'utilisateur regarde à travers le guide optique 2.4. Agencer le système de vision oculaire de telle sorte que le dispositif 8.1 de capture d'images soit solidaire du module afficheur 2.1 permet que :
- lorsque le guide optique 2.4 est dans la première position, l'axe de visée 9.1 du dispositif 8.1 de capture d'images est parallèle à l'axe de visée nominale 7.2 de l'oeil de l'utilisateur (cet agencement est représenté sur la Fig. 9A) ; et
- lorsque le guide optique 2.4 est dans la seconde position, l'axe de visée 9.1 du dispositif 8.1 de capture d'images est tourné selon un axe de rotation horizontal passant par le centre C de rotation de l'oeil, de la même manière que l'est le guide optique 2.4 dans la seconde position (cet agencement est représenté sur la Fig. 9B).

Ainsi, lorsque le module afficheur 2.1 est positionné de telle sorte que le guide optique 2.4 soit dans la première position, la position correspondante du dispositif 8.1 de capture d'images permet d'effectuer des captures de ce qui est vu, à travers le guide optique 2.4, par l'oeil de l'utilisateur à l'infini. Si l'utilisateur se trouve face à une personne, cette position du dispositif 8.1 de capture d'images permet d'effectuer des captures d'images du visage de cette personne.

Ainsi, lorsque le module afficheur 2.1 est positionné de telle sorte que le guide optique 2.4 soit dans la première position, la position correspondante du dispositif 8.1 de capture d'images permet de continuer à effectuer des captures d'images, mais sans que des images du visage de la personne en face ne puissent être prises.

Ainsi, lorsque l'utilisateur porte le système de vision oculaire, la personne en face est capable de déterminer, au vu de la position du module afficheur 2.1, si des images de son visage peuvent être capturées par le dispositif 8.1 de capture d'images. De plus, lorsque l'utilisateur est en conversation avec ladite personne, il est plus confortable pour l'utilisateur de placer le guide optique 2.4 dans la seconde position, afin d'éviter d'avoir à regarder ladite personne au travers du guide optique 2.4.

Le dispositif 8.1 de capture d'images peut être de même nature que ceux mis en oeuvre dans les téléphones intelligents (« smart phone » en anglais) actuels, sans dispositif de mise au point, avec une profondeur de champ prédéfinie. Cela permet d'obtenir un module afficheur compact malgré la présence du dispositif 8.1 de capture d'images.

Dans un mode de réalisation particulier, le module afficheur 2.1 comporte au moins un capteur de position permettant de détecter lorsque le guide optique 2.4 est dans la première position et/ou lorsque le guide optique 2.4 est dans la seconde position. Le porte-plot 4.4 et le support de fixation et de guidage 4.5 peuvent être adaptés pour installer le(s)dit(s) capteur(s) de position. Ce(s) capteur(s) de position peu(ven)t être associé(s) à au moins un voyant lumineux dont un premier état est représentatif du guide optique 2.4 dans la première position et dont un second état est représentatif du guide optique 2.4 dans la seconde position. Ce(s) voyant(s) lumineux peu(ven)t alors être utilisés par la personne en face de l'utilisateur portant le système de vision oculaire pour déterminer si le dispositif 8.1 de capture d'images est en position de permettre de capturer des images du visage de ladite personne.

Dans un mode de réalisation particulier, le module afficheur 2.1 comporte au moins un dit capteur de position et comporte en outre des moyens de communication, préférentiellement sans-fil, permettant de communiquer, directement ou indirectement avec un serveur de traitement (« processing server » en anglais). Les moyens de communication sont adaptés pour permettre au système de vision oculaire de transmettre audit serveur une information représentative de la position dans laquelle se trouve le guide optique 2.4, telle qu'obtenue d'après des indications données par le(s)dit(s) capteur(s) de position. Les moyens de communication sont adaptés pour permettre au système de vision oculaire de transmettre audit serveur des images capturées par le dispositif 8.1 de capture d'images et de recevoir dudit serveur les images à propager via le guide optique 2.4. Le serveur de traitement peut alors appliquer un traitement aux images capturées, reçues en provenance du système de vision oculaire, dépendant de la position du guide optique 2.4. Par exemple, le dispositif 8.1 de capture d'images est une caméra et le serveur de traitement est adapté pour : appliquer sur les images reçues du système de vision oculaire un traitement d'application de réalité augmentée, lorsque le guide optique 2.4 est dans la première position ; et appliquer sur les images reçues du système de vision oculaire un traitement d'application de reconnaissance gestuelle, lorsque le guide optique 2.4 est dans la seconde position. L'application de réalité augmentée permet par exemple de reconnaître un environnement de l'utilisateur, grâce à une comparaison des images reçues du système de vision oculaire avec des données représentatives d'environnement connues et stockées dans une base de données accessible dudit serveur. Le serveur de traitement peut alors transmettre au système de vision oculaire, pour affichage via le guide optique 2.4, des informations relatives à l'environnement reconnu et contenues dans la base de données. L'application de reconnaissance gestuelle permet à l'utilisateur de contrôler par gestes des mains le système de vision oculaire et/ou un dispositif accessoire au système de vision oculaire et/ou un dispositif tiers connecté, directement ou indirectement, au serveur de traitement grâce à une comparaison des images reçues du système de vision oculaire avec des données représentatives de gestes prédéfinis et stockées dans une base de données accessible dudit serveur. En effet, il est plus confortable pour l'utilisateur de contrôler les gestes effectués avec les mains en mettant le guide optique 2.4 dans la seconde position, puisque les mains se trouvent naturellement au dessous de l'axe de visée nominale 7.2 de l'oeil de l'utilisateur.

Pour effectuer des traitements de données, comme par exemple des traitements en vue d'échanger des données avec ledit serveur de traitement, le module afficheur 2.1 peut comporter, reliés par un bus de communication : un processeur ou CPU (« Central Processing Unit » en anglais) ; une mémoire vive RAM (« Random Access Memory » en anglais) ; une mémoire morte ROM (« Read Only Memory » en anglais) ; une unité de stockage ou un lecteur de support de stockage, tel qu'un lecteur de cartes SD (« Secure Digital » en anglais) ; et une interface de communication permettant d'échanger des données. Le processeur est capable d'exécuter des instructions chargées dans la RAM à partir de la ROM, d'une mémoire externe (non représentée), d'un support de stockage, ou d'un réseau de communication. Lorsque le module afficheur 2.1 est mis sous tension, le processeur est capable de lire de la RAM des instructions et de les exécuter. Ces instructions forment un programme d'ordinateur causant la mise en oeuvre, par le processeur, de tout ou partie desdits traitements.

Ainsi, tout ou partie desdits traitements peut être implémenté sous forme logicielle par exécution d'un ensemble d'instructions par une machine programmable, tel qu'un DSP (« Digital Signal Processor » en anglais) ou un microcontrôleur, ou être implémenté sous forme matérielle par une machine ou un composant dédié, tel qu'un FPGA (« Field-Programmable Gate Array » en anglais) ou un ASIC (« Application-Specific Integrated Circuit » en anglais).

La Fig. 10A illustre schématiquement un quatrième agencement de boîte à oeil. La Fig. 10A est une vue schématique partielle de dessus, en transparence, du système de vision oculaire. La Fig. 10A montre un agencement dans lequel la boîte à oeil 7.1 n'englobe pas la pupille de l'oeil. L'utilisateur n'a alors qu'une vue partielle de l'image propagée dans le guide optique 2.4

Dans ce mode de réalisation, le module afficheur 2.1 comporte des moyens supplémentaires de rotation du guide optique 2.4, afin de permettre un ajustement horizontal de la boîte à oeil. En ajustant horizontalement la position du guide optique 2.4, l'utilisateur peut assurer que sa pupille s'inscrit dans la boîte à oeil créée dans la première position du guide optique 2.4, et par voie de conséquence dans la seconde position du guide optique 2.4. L'utilisateur place alors le module afficheur 2.1 de sorte que le guide optique 2.4 soit placé dans la première position. L'utilisateur ajuste alors horizontalement le guide optique 2.4, par rotation grâce auxdits moyens supplémentaires, jusqu'à ce que l'image transportée par le guide optique 2.4 soit complètement visible par l'oeil de l'utilisateur (tel que montré sur la Fig. 10B). Une fois effectué le réglage horizontal du guide optique 2.4 pour la première position du guide optique 2.4, ce réglage reste applicable pour la seconde position du guide optique 2.4. La rotation du guide optique 2.4 s'opère autour d'un axe vertical, passant préférentiellement par la section d'injection 1.4 du guide optique 2.4. Dans un mode de réalisation particulier, cet axe vertical passe substantiellement par le barycentre de la section d'injection 1.4.

Les moyens supplémentaires de rotation sont agencés pour permettre préférentiellement un débattement du guide optique 2.4 de ±10°. Un affinement de la position horizontale du guide optique 2.4 de l'ordre de ±2° peut cependant s'avérer suffisant dans la majorité des cas.

La Fig. 10B illustre donc schématiquement un cinquième agencement de boîte à oeil. La Fig. 10B est aussi une vue schématique partielle de dessus, en transparence, du système de vision oculaire. La Fig. 10B montre un agencement dans lequel la boîte à oeil 7.1 englobe la pupille de l'oeil. Le guide optique 2.4 y est décalé horizontalement d'un angle de 5° par rapport au positionnement du guide optique 2.4 dans la Fig. 10A. Le cinquième agencement de boîte à oeil correspond à un positionnement de la zone d'extraction du guide optique 2.4 dans l'axe de visée nominale 7.2 de l'oeil de l'utilisateur, après ajustement horizontal du guide optique 2.4 par rapport au quatrième agencement de la Fig. 4. L'image transportée par le guide optique 2.4 est alors complètement visible par l'oeil de l'utilisateur, dans l'axe de visée nominale 7.2 de l'oeil de l'utilisateur.

Les moyens supplémentaires de rotation sont ainsi adaptés pour permettre d'ajuster horizontalement, lorsque le guide optique 2.4 est dans la première position, la zone d'extraction par rapport à l'axe de visée nominale 7.2 de l'oeil de l'utilisateur.

## Revendications

1. Système de vision oculaire destiné à être porté par un utilisateur, le système de vision oculaire est un équipement destiné à être porté fixe par rapport à la tête de l'utilisateur, ledit système de vision oculaire comportant un module afficheur (2.1), le module afficheur comportant un guide optique transparent (2.4) adapté pour propager par réflexions totales internes un faisceau lumineux transportant une image (2.6) jusqu'à une section d'extraction dudit guide optique, ledit système de vision oculaire comportant :
- des moyens de positionnement (4.9, 6.1) du guide optique dans une première position dans laquelle la zone d'extraction est placée selon un premier axe correspondant à un axe de visée nominale (7.2) de l'oeil de l'utilisateur ;
- des moyens de positionnement (4.9, 6.1) du guide optique dans une seconde position dans laquelle la zone d'extraction est placée selon un second axe décalé par rapport à l'axe de visée nominale de l'oeil de l'utilisateur ; et
- des moyens de rotation (4.4, 4.5, 4.9, 6.1) du guide optique par rapport à un cadre du système de vision oculaire, lorsque l'utilisateur porte le système de vision oculaire, les moyens de rotation étant adaptés pour permettre au guide optique de passer de la première position à la seconde position, et vice-versa ;
**caractérisé en ce que** les moyens de rotation du guide optique sont adaptés pour effectuer la rotation autour d'un axe destiné à passer substantiellement par le centre (C) de rotation de l'oeil de l'utilisateur,
et **en ce que**, pour effectuer la rotation du guide optique entre la première position et la seconde position, ledit système de vision oculaire comporte :
- un porte-plot (4.4) comportant au moins un plot (4.9) ;
- un support de fixation au cadre du système de vision oculaire et de guidage (4.5) comportant au moins une rainure oblongue (6.1) destinée à recevoir ledit plot, chaque rainure étant telle que, lorsque ledit plot est placé à une extrémité de ladite rainure, le guide optique est dans la première position et, lorsque ledit plot est placé à l'autre extrémité de ladite rainure, le guide optique est dans la seconde position.

2. Système de vision oculaire selon la revendication 1, **caractérisé en ce que** le second axe est décalé de 20° par rapport à l'axe de visée nominale de l'oeil de l'utilisateur.

3. Système de vision oculaire selon l'une quelconque des revendications 1 et 2, **caractérisé en ce que**, ledit système de vision oculaire étant des lunettes (2.3), le module afficheur étant fixé sur une (4.1) des branches desdites lunettes, ledit système de vision oculaire comporte en outre des moyens d'ajustement (3.2) en hauteur d'un appui-nez (2.5) desdites lunettes.

4. Système de vision oculaire selon la revendication 3, **caractérisé en ce que** lesdits moyens d'ajustement en hauteur comportent une molette (3.1) et des moyens de conversion d'un mouvement de rotation de la molette en un mouvement de translation de l'appui-nez.

5. Système de vision oculaire selon la revendication 3, **caractérisé en ce que** lesdits moyens d'ajustement en hauteur comportent une crémaillère (3.5) composée de crans, chacun des crans définissant une hauteur prédéfinie de l'appui-nez.

6. Système de vision oculaire selon l'une quelconque des revendications 1 à 5, **caractérisé en ce que**, ledit système de vision oculaire étant des lunettes (2.3), le module afficheur étant fixé sur une (4.1) des branches desdites lunettes, ledit système de vision oculaire comporte en outre une batterie fixée sur l'autre branche desdites lunettes.

7. Système de vision oculaire selon l'une quelconque des revendications 1 à 6, **caractérisé en ce qu'**il comporte un ressort (4.3) permettant d'assurer un engagement de chaque plot dans une dite rainure oblongue correspondante et **en ce que** chaque rainure oblongue comporte à chacune de ses extrémités un trou borgne (6.2) adapté pour recevoir un dit plot correspondant sous l'action dudit ressort.

8. Système de vision oculaire selon l'une quelconque des revendications 1 à 7, **caractérisé en ce que** ledit système de vision oculaire comporte en outre un bouton d'actionnement (4.6) fixé au porte-plot et adapté pour contrer l'action du ressort afin de désengager chaque plot de la rainure oblongue correspondante.

9. Système de vision oculaire selon l'une quelconque des revendications 1 à 8, **caractérisé en ce que** ledit système de vision oculaire comporte un boîtier (4.2) dans lequel un évidement (4.7) est pratiqué, l'évidement étant destiné à recevoir le porte-plot et le support de fixation et de guidage, l'embouchure de l'évidement comportant, à un endroit, une partie plus grande pour permettre d'insérer le porte-plot et le ressort dans ledit boîtier.

10. Système de vision oculaire selon l'une quelconque des revendications 1 à 9, **caractérisé en ce qu'**un dispositif de capture d'images est monté de manière solidaire au module afficheur de telle sorte que l'axe de visée dudit dispositif de capture d'images est parallèle à l'axe de visée de l'utilisateur lorsque l'utilisateur regarde à travers le guide optique.

11. Système de vision oculaire selon la revendication 10, **caractérisé en ce qu'**il comporte au moins un capteur de position permettant de détecter lorsque le guide optique est dans la première position et/ou lorsque le guide optique est dans la seconde position.

12. Système de vision oculaire selon la revendication 11, **caractérisé en ce qu'**il comporte au moins un voyant lumineux, associé au(x)dit(s) capteur(s) de position, dont un premier état est représentatif du guide optique dans la première position et dont un second état est représentatif du guide optique dans la seconde position.

13. Système de vision oculaire selon l'une quelconque des revendications 11 et 12, **caractérisé en ce qu'**il comporte des moyens de communication adaptés pour transmettre à un serveur des images capturées avec ledit dispositif de capture d'images et une information représentative de la position du guide optique détectée par le(s)dit(s) capteur(s) et pour recevoir du serveur l'image à transporter par le guide optique.

14. Système de vision oculaire selon la revendication 13, **caractérisé en ce que**, ledit dispositif de capture d'images étant une caméra, ledit serveur est adapté pour :
- appliquer sur les images reçues du système de vision oculaire un traitement d'application de réalité augmentée, lorsque le guide optique est dans la première position ; et
- appliquer sur les images reçues du système de vision oculaire un traitement d'application de reconnaissance gestuelle, lorsque le guide optique est dans la seconde position.

15. Système de vision oculaire selon l'une quelconque des revendications 1 à 14, **caractérisé en ce qu'**il comporte des moyens supplémentaires de rotation adaptés pour permettre d'ajuster horizontalement, lorsque le guide optique est dans la première position, la zone d'extraction par rapport à l'axe de visée nominale de l'oeil de l'utilisateur.

## Patentansprüche

1. Optisches System des Auges, das dazu bestimmt ist, von einem Benutzer getragen zu werden, wobei das optisches System des Auges eine Ausrüstung ist, die dazu bestimmt ist, fest in Bezug zum Kopf des Benutzers getragen zu werden, wobei das optische System des Auges ein Anzeigemodul (2.1) umfasst, wobei das Anzeigemodul einen transparenten optischen Wellenleiter (2.4) umfasst, der dazu vorgesehen ist, durch innere Totalreflexionen einen Lichtstrahl, der ein Bild (2.6) transportiert, bis zu einem Extraktionsabschnitt des optischen Wellenleiters auszubreiten, wobei das optische System des Auges umfasst:
- Mittel zur Positionierung (4.9, 6.1) des optischen Wellenleiters in einer ersten Position, in der die Extraktionszone entlang einer ersten Achse entsprechend einer Nominalsichtachse (7.2) des Auges des Benutzers angeordnet ist;
- Mittel zur Positionierung (4.9, 6.1) des optischen Wellenleiters in einer zweiten Position, in der die Extraktionszone entlang einer zweiten Achse angeordnet ist, die in Bezug zur Nominalsichtachse des Auges des Benutzers versetzt ist; und
- Rotationsmittel (4.4, 4.5, 4.9, 6.1) des optischen Wellenleiters in Bezug zu einem Rahmen des optischen Systems des Auges, wenn der Benutzer das optische System des Auges trägt, wobei die Rotationsmittel dazu vorgesehen sind, es dem optischen Wellenleiter zu ermöglichen, von der ersten Position in die zweite Position überzugehen und umgekehrt;
**dadurch gekennzeichnet, dass** die Rotationsmittel des optischen Wellenleiters dazu vorgesehen sind, die Rotation um eine Achse auszuführen, die dazu bestimmt ist, im Wesentlichen durch den Rotationsmittelpunkt (C) des Auges des Benutzers zu verlaufen,
und dass für die Ausführung der Rotation des optischen Wellenleiters zwischen der ersten Position und der zweiten Position das optische System des Auges umfasst:
- einen Bolzenträger (4.4), umfassend mindestens einen Bolzen (4.9);
- eine Stütze zur Befestigung am Rahmen des optischen Systems des Auges und zur Führung (4.5), umfassend mindestens eine längliche Nut (6.1), die dazu bestimmt ist, den Bolzen aufzunehmen, wobei jede Nut derart ist, dass, wenn der Bolzen an einem Ende der Nut angeordnet ist, der optische Wellenleiter in der ersten Position ist, und, wenn der Bolzen am anderen Ende der Nut angeordnet ist, der optische Wellenleiter in der zweiten Position ist.

2. Optisches System des Auges nach Anspruch 1, **dadurch gekennzeichnet, dass** die zweite Achse um 20° in Bezug zur Nominalsichtachse des Auges des Benutzers versetzt ist.

3. Optisches System des Auges nach einem der Ansprüche 1 und 2, **dadurch gekennzeichnet**, wobei das optische System des Auges Brillen (2.3) sind, wobei das Anzeigemodul auf einem (4.1) der Bügel der Brillen befestigt ist, das optische System des Auges ferner Mittel zur Höhenanpassung (3.2) eines Nasenstegs (2.5) der Brillen umfasst.

4. Optisches System des Auges nach Anspruch 3, **dadurch gekennzeichnet, dass** die Höhenanpassungsmittel ein Rändelrad (3.1) und Mittel zur Umwandlung einer Rotationsbewegung des Rändelrads in eine Translationsbewegung des Nasenstegs umfassen.

5. Optisches System des Auges nach Anspruch 3, **dadurch gekennzeichnet, dass** die Höhenanpassungsmittel eine Zahnstange (3.5) umfassen, die aus Rasten besteht, wobei jede der Rasten eine vordefinierte Höhe des Nasenstegs definiert.

6. Optisches System des Auges nach einem der Ansprüche 1 bis 5, **dadurch gekennzeichnet, dass** das optische System des Auges Brillen (2.3) sind, wobei das Anzeigemodul auf einem (4.1) der Bügel der Brillen befestigt ist, wobei das optische System des Auges ferner eine Batterie umfasst, die auf dem anderen Bügel der Brillen befestigt ist.

7. Optisches System des Auges nach einem der Ansprüche 1 bis 6, **dadurch gekennzeichnet, dass** es eine Feder (4.3) umfasst, die es ermöglicht, ein Eingreifen jedes Bolzens in eine entsprechende längliche Nut zu gewährleisten, und dass jede längliche Nut an jedem ihrer Enden ein Grundloch (6.2) umfasst, das dazu vorgesehen ist, einen entsprechenden Bolzen unter der Wirkung der Feder aufzunehmen.

8. Optisches System des Auges nach einem der Ansprüche 1 bis 7, **dadurch gekennzeichnet, dass** das optische System des Auges ferner einen Betätigungsknopf (4.6) umfasst, der am Bolzenträger befestigt und dazu vorgesehen ist, der Wirkung der Feder entgegenzuwirken, um jeden Bolzen aus der entsprechenden länglichen Nut zu entfernen.

9. Optisches System des Auges nach einem der Ansprüche 1 bis 8, **dadurch gekennzeichnet**, das das optische System des Auges ein Gehäuse (4.2) umfasst, in dem eine Ausnehmen (4.7) vorgesehen ist, wobei die Ausnehmung dazu bestimmt ist, den Bolzenträger und die Befestigungs- und Führungsstütze aufzunehmen, wobei die Einmündung der Ausnehmung an einer Stelle einen größeren Abschnitt umfasst, um es zu ermöglichen, den Bolzenträger und die Feder in das Gehäuse einzusetzen.

10. Optisches System des Auges nach einem der Ansprüche 1 bis 9, **dadurch gekennzeichnet, dass** eine Bildaufhahmevorrichtung fest an dem Anzeigemodul montiert ist, so dass die Sichtachse der Bildaufhahmevorrichtung parallel zur Sichtachse des Benutzers ist, wenn der Benutzer durch den optischen Wellenleiter blickt.

11. Optisches System des Auges nach Anspruch 10, **dadurch gekennzeichnet, dass** es mindestens einen Positionsfühler umfasst, der es ermöglicht zu erfassen, wenn der optische Wellenleiter in der ersten Position ist, und/oder wenn der optische Wellenleiter in der zweiten Position ist.

12. Optisches System des Auges nach Anspruch 11, **dadurch gekennzeichnet, dass** es mindestens eine Leuchtanzeige umfasst, die dem(n) Positionsfühler(n) zugeordnet ist, bei der ein erster Zustand für den optischen Wellenleiter in der ersten Position repräsentativ ist, und bei der ein zweiter Zustand für den optischen Wellenleiter in der zweiten Position repräsentativ ist.

13. Optisches System des Auges nach einem der Ansprüche 11 und 12, **dadurch gekennzeichnet, dass** es Kommunikationsmittel umfasst, die dazu vorgesehen sind, an einen Server mit der Bildaufnahmevorrichtung aufgenommene Bilder und eine Information, die für die Position des optischen Wellenleiters repräsentativ ist, die von dem(n) Fühler(n) erfasst wurde, zu übertragen und von dem Server das von dem optischen Wellenleiter zu transportierende Bilde zu empfangen.

14. Optisches System des Auges nach Anspruch 13, **dadurch gekennzeichnet, dass**, wobei die Bildaufnahmevorrichtung eine Kamera ist, der Server dazu vorgesehen ist:
- an den von dem optischen System des Auges empfangenen Bildern eine Bearbeitung des Anlegens einer erhöhten Realität anzuwenden, wenn der optische Wellenleiter in der ersten Position ist; und
- an den von dem optischen System des Auges empfangenen Bildern eine Bearbeitung der Erkennung von Gesten anzuwenden, wenn der optische Wellenleiter in der zweiten Position ist.

15. Optisches System des Auges nach einem der Ansprüche 1 bis 14, **dadurch gekennzeichnet, dass** es zusätzliche Rotationsmittel umfasst, die dazu vorgesehen sind, es zu ermöglichen, wenn der optische Wellenleiter in der ersten Position ist, die Extraktionszone in Bezug zur Nominalsichtachse des Auges des Benutzers horizontal auszurichten.

## Claims

1. Ocular vision system intended to be worn by a user, the ocular vision system is equipment intended to be worn fixed relatively to the user's head, said ocular system comprising a display module (2.1), the display module comprising a transparent optical guide (2.4) adapted for propagating, by total internal reflections, a light beam transporting an image (2.6) as far as an extraction section of said optical guide, said ocular vision system comprising:
- means (4.9, 6.1) for positioning the optical guide in a first position in which the extraction zone is placed on a first axis corresponding to a nominal axis of sight (7.2) of the eye of the user;
- means (4.9, 6.1) for positioning the optical guide in a second position in which the extraction zone is placed on a second axis offset with respect to the nominal axis of sight of the eye of the user; and
- means (4.4, 4.5, 4.9, 6.1) for rotating the optical guide with respect to a frame of the ocular vision system, when the user is wearing the ocular vision system, the means for rotating the optical guide being adapted for enabling the optical guide to pass from the first position to the second position and vice versa;
**characterised in that** the means for rotating the optical guide are adapted for performing the rotation about an axis intended to pass substantially through the centre (C) of rotation of the eye of the user,
and **in that**, for rotating the optical guide between the first position and the second position, said ocular vision system comprises:
- a stud holder (4.4) comprising at least one stud (4.9); and
- an ocular vision system frame fixing and guiding support (4.5) comprising at least one oblong groove (6.1) intended to receive said stud, each groove being such that, when said stud is placed at one end of said groove, the optical guide is in the first position and, when said stud is placed at the other end of said groove, the optical guide is in the second position.

2. Ocular vision system according to claim 1, **characterised in that** the second axis is offset by 20° with respect to the nominal axis of sight of the eye of the user.

3. Ocular vision system according to any one of claims 1 and 2, **characterised in that**, said system being spectacles (2.3), the display module being fixed to one (4.1) of the sidepieces of said spectacles, said ocular vision system further comprises means (3.2) for adjusting a nose pad (2.5) of said spectacles for height.

4. Ocular vision system according to claim 3, **characterised in that** said height-adjustment means comprise a knurled wheel (3.1) and means for converting a rotation movement of the knurled wheel into a translation movement of the nose pad.

5. Ocular vision system according to claim 3, **characterised in that** said height-adjustment means comprise a rack (3.5) composed of notches, each of the notches defining a predefined height of the nose pad.

6. Ocular vision system according to any one of claims 1 to 5, **characterised in that**, said ocular vision system being spectacles (2.3), the display module being fixed to one (4.1) of the sidepieces of said spectacles, said ocular vision system further comprises a battery fixed to the other sidepiece of said spectacles.

7. Ocular vision system according to any one of claims 1 to 6, **characterised in that** it comprises a spring (4.3) for ensuring engagement of each stud in one corresponding said oblong groove, and **in that** each oblong groove comprises, at each of its ends, a blind hole (6.2) adapted for receiving one corresponding said stud under the action of said spring.

8. Ocular vision system according to any one of claims 1 to 7, **characterised in that** said ocular vision system further comprises an actuation button (4.6) fixed to the stud holder and adapted for countering the action of the spring for disengaging each stud from the corresponding oblong groove.

9. Ocular vision system according to any one of claims 1 to 8, **characterised in that** said ocular vision system comprises a housing (4.2) in which a recess (4.7) is formed, the recess being intended to receive the stud holder and the fixing and guiding support, the mouth of the recess comprising, at one point, a larger part to enable inserting the stud holder and spring in said housing.

10. Ocular vision system according to any one of claims 1 to 9, **characterised in that** an image capture device is mounted fixedly on the display module so that the axis of sight of said image capture device is parallel to the axis of sight of the user when the user is looking through the optical guide.

11. Ocular vision system according to claim 10, **characterised in that** it comprises at least one position sensor for detecting when the optical guide is in the first position and/or when the optical guide is in the second position.

12. Ocular vision system according to claim 11, **characterised in that** it comprises at least one indicator light, associated with said position sensor or sensors, a first state of which represents the optical guide in the first position and a second state of which represents the optical guide in the second position.

13. Ocular vision system according to any one of claims 11 and 12, **characterised in that** it comprises communication means adapted for transmitting to a server images captured with said image capture device and information representing the position of said optical guide detected by said sensor or sensors and for receiving from the server the image to be transported by the optical guide.

14. Ocular vision system according to claim 13, **characterised in that**, said image capture device being a video camera, said server is adapted for:
- applying an augmented reality application processing to the images received from the ocular vision system, when the optical guide is in the first position; and
- applying a gesture recognition application processing to the images received from the ocular vision system, when the optical guide is in the second position.

15. Ocular vision system according to any one of claims 1 to 14, **characterised in that** it comprises supplementary rotation means adapted for enabling adjusting the extraction zone horizontally with respect to the nominal axis of sight of the eye of the user, when the optical guide is in the first position.
